# FASCICULE DE BREVET EUROPEEN

(11) **EP 0 550 319 B1**
(45) Date de publication et mention de la délivrance du brevet: **02.10.1996**
(21) Numéro de dépôt: 92403490.3
(22) Date de dépôt: 21.12.1992
(51) Int. Cl.: H04N 3/15

(54) **Caméra à détecteur, munie d'une protection électronique**
Kamera mit elektronischem Schutz des Detektors
Camera with an electronic protection of the detector

(30) Priorité: 31.12.1991 FR 9116380
(43) Date de publication de la demande: 07.07.1993
(73) Titulaire: THOMSON-CSF, 75008 Paris (FR)
(72) Inventeur: Fouilloy, Jean-Pierre, THOMSON-CSF, F-92402 Courbevoie Cedex (FR); Doittau, François-Xavier, THOMSON-CSF, F-92402 Courbevoie Cedex (FR)
(74) Mandataire: Courtellemont, Alain

(56) Documents cités:
- EP-A- 0 122 588
- US-A- 5 038 214
- PATENT ABSTRACTS OF JAPAN vol. 6, no. 9 (E-90)(887) 20 Janvier 1982 & JP-A-56 132 064 (MATSUSHITA ELECTRIC INDUSTRIAL CO., LTD.) 16 Octobre 1981

## Description

La présente invention concerne la protection des caméras à détecteur contre le brouillage, l'éblouissement voire la destruction par ce que l'on peut appeler les contre-mesures optroniques.

Il est connu, en contre-mesures optroniques, de détecter une caméra à l'aide de la réflexion du faisceau d'un laser continu de faible puissance puis de pointer un laser de puissance fournissant des impulsions, dans la direction de la caméra repérée, pour illuminer tout ou partie de son détecteur optique afin de l'éblouir voire de l'endommager ; les deux lasers travaillent pour cela dans une longueur d'onde pour laquelle l'optique de la caméra est transparente.

L'éblouissement de la caméra par le faisceau du laser de puissance est dû à une saturation de tout ou partie des capteurs qui composent le détecteur et se traduit par des images dont la surface est partiellement ou totalement saturée et, si la fréquence des impulsions du laser est supérieure à la fréquence des images, cette saturation affecte systématiquement toutes les images.

Il est connu, pour protéger une caméra contre ces contre-mesures, de repérer le rayonnement monochromatique des lasers par discrimination entre son spectre étroit et le spectre large des sources naturelles et d'arrêter le balayage en trames de la caméra ou d'inhiber ses circuits d'amplification pendant toute la durée des impulsions du laser perturbateur. Pour avoir une perte d'image qui corresponde sensiblement à la seule partie de l'image concernée par l'impulsion laser, il est difficile de supprimer la seule partie de la trame de balayage qui est perturbée ; et dans les caméras dites de la seconde génération, c'est-à-dire où la détection est immédiatement suivie d'un multiplexage avec amplificateur unique sur la sortie du multiplexeur, il est difficile d'inhiber l'amplificateur seulement lors du passage des signaux perturbés.

De US-A-5 038 214, il est aussi connu de contrôler la durée d'exposition des capteurs photosensibles d'une caméra lorsque au moins l'un d'entre eux est saturé, pour éviter l'éblouissement.

La présente invention a pour but d'éviter ou pour le moins de réduire ces inconvénients.

Ceci est obtenu en contrôlant les signaux fournis par le capteur et en éliminant ceux dont la valeur anormalement élevée montre qu'ils proviennent d'une observation perturbée par un brouilleur

Selon la présente invention il est proposé une caméra munie d'une protection électronique contre les contre-mesures, comportant en série un détecteur ayant n capteurs, où n est un nombre entier positif, n éléments de couplage reliés respectivement aux n capteurs et n circuits d'intégration principaux reliés respectivement aux n éléments de couplage pour en recevoir des charges produites par les n capteurs et les transmettre à une fréquence donnée, caractérisée en ce que tout élément de couplage donné parmi les n éléments de couplage comprend un circuit d'intégration intermédiaire pour accumuler des charges produites par le capteur auquel est relié l'élément de couplage donné et les transmettre à une fréquence supérieure à la fréquence donnée et en ce que la caméra comporte des moyens de mesure (M) pour mesurer la charge des n circuits d'intégration intermédiaires et des moyens de commande pour modifier les contenus des circuits d'intégration intermédiaires lorsque l'une au moins des charges mesurées par les moyens de mesure dépasse une valeur donnée.

La présente invention sera mieux comprise et d'autres caractéristiques apparaîtront à l'aide de la description ci-après et des figures s'y rapportant qui représentent :
- la figure 1, un schéma électrique partiel d'une caméra selon l'invention,
- la figure 2 un diagramme des temps relatif au schéma selon la figure 1.

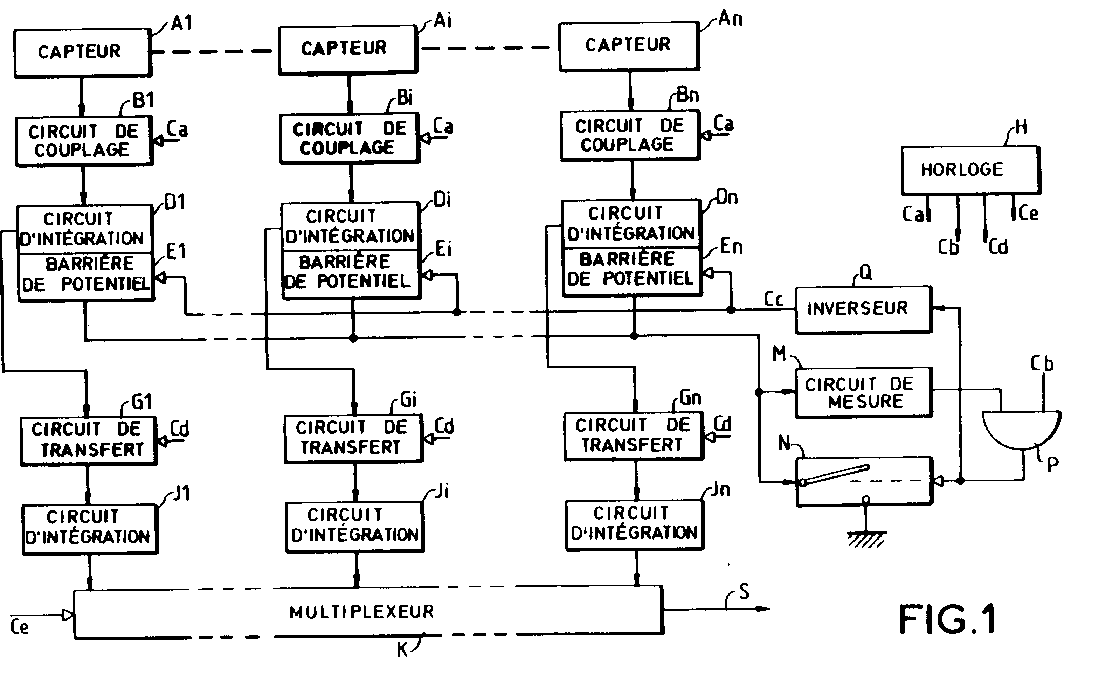

La figure 1 se rapporte à une caméra munie d'un détecteur constitué par une barrette de capteurs, dont trois A1, Ai, An sont représentés sur la figure ; l'indice n correspond au nombre total de capteurs de la barrette et l'indice i représente un nombre entier supérieur à 1 et inférieur à n.

Chacun des capteurs de la caméra est relié par une chaîne qui lui est propre à une entrée qui lui est propre d'un multiplexeur K muni d'une ligne de sortie S. Pour simplifier le dessin et étant donné que toutes les n chaînes relatives aux n capteurs sont identiques, seules les chaînes relatives aux capteurs AI, Ai et An ont été représentées et les éléments qui leur sont propres sont désignés par des lettres majuscules suivies respectivement d'un 1, d'un i ou d'un n. Les autres éléments, tels que le multiplexeur K, qui sont communs aux n chaînes, sont désignés sur la figure 1 par une lettre majuscule suivie d'aucun autre élément de référence. Quant aux différents signaux de commande ils sont désignés par la lettre C suivie de la lettre minuscule a, b, c, d ou e.

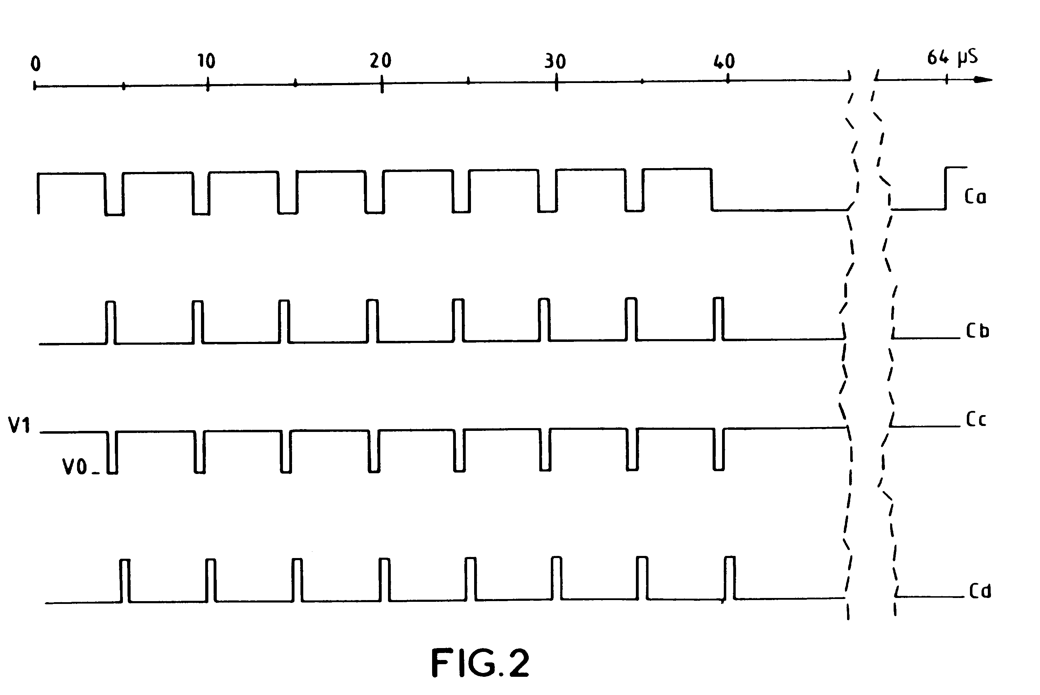

La sortie du capteur Ai est reliée à l'entrée d'un circuit de couplage Bi commandé par un signal Ca fourni par une horloge H et représenté sur la figure 2. La sortie du circuit Bi est reliée à l'entrée d'un circuit d'intégration qui sera dit intermédiaire, Di, associé à une barrière de potentiel Ei. Un accès du circuit d'intégration Di est relié à l'entrée d'un circuit de transfert Gi commandé par un signal Cd de l'horloge H ; le signal Cd est représenté sur la figure 2.

La sortie du circuit de transfert Gi est reliée à l'entrée d'un circuit d'intégration qui sera dit principal, Ji, dont la sortie est reliée au multiplexeur K. La commande de transfert du multiplexeur K est assurée par un signal Ce fourni par l'horloge H.

Un accès de la barrière de potentiel Ei est relié à un circuit de mesure M et à un interrupteur N. La sortie du circuit de mesure M est reliée à la seconde entrée d'une porte ET, P, qui reçoit sur sa première entrée un signal de commande, Cb, fourni par l'horloge H et représenté sur la figure 2. La sortie de la porte ET, P, est reliée à l'entrée d'un inverseur Q qui commande les barrières de potentiel telles que Ei et à l'entrée de commande de l'interrupteur N afin de commander la mise à la terre de l'entrée de cet interrupteur.

Dans l'exemple décrit, comme le montrent les signaux de la figure 2, les électrons fournis par le capteur Ai sont intégrés pendant 32 microsecondes, par périodes de 64 microsecondes, c'est-à-dire à la cadence de lignes de télévision, et le temps d'intégration est divisé en 8 espaces de temps de 4 microsecondes, séparés par 1 microseconde.

Pendant chaque intervalle de temps de 4 microsecondes, le détecteur Ai est relié au circuit d'intégration intermédiaire Di par le circuit de couplage Bi qui est un interrupteur constitué, dans l'exemple décrit par un transistor MOS - FET commandé par le signal Ca de la figure 2.

Le circuit d'intégration intermédiaire Di est relié par la barrière de potentiel Ei à l'entrée de signal de l'interrupteur N. Dans l'exemple décrit la barrière de potentiel Ei comporte un transistor FET dont le drain est relié au circuit de mesure M et à l'interrupteur N et dont la grille reçoit le signal Cc représenté sur la figure 2. La hauteur de la barrière de potentiel Bi peut prendre deux valeurs V1 et V0 ; lorsque la hauteur a la valeur V1, seules les charges telles que le potentiel du circuit Di excède V1 sont recueillies par le drain ; lorsque la hauteur à la valeur V0, toutes les charges contenues dans le circuit Di s'écoulent dans le drain. V1 est réglé de façon telle qu'en fonctionnement normal, c'est-à-dire sans éblouissement des détecteurs A1-An, le potentiel du circuit d'intégration intermédiaire, Di, est inférieur à V1. Ainsi la barrière de potentiel Ei joue un rôle de commutateur.

Tant que le potentiel du circuit Di (et des n-1 autres circuits correspondants dans les n-1 autres chaînes) est inférieur à V1, le circuit de mesure M délivre un signal 0, si bien que la porte ET délivre un signal qui est en permanence à zéro et que l'inverseur Q délivre un signal Cc qui est en permanence à la valeur V1.

Quand le potentiel du circuit Di (et/ou d'autres parmi les n-1 autres circuits correspondants dans les n-1 autres chaînes) est supérieur à V1, c'est-à-dire si un signal de forte amplitude est reçu pendant un des intervalles de temps de 4 microsecondes, des charges débordent dans le drain, le circuit de mesure M délivre un signal 1 ; ainsi le circuit ET, P, ne délivre plus un signal qui est en permanence à zéro mais un signal qui prend la valeur 1 pendant une première partie des durées de 1 microseconde du signal Ca, c'est-à-dire un signal qui recopie le signal Cb de la figure 2. La hauteur de la barrière Ei (et des n-1 autres barrières correspondantes) est alors abaissée, par l'inverseur Q, à la valeur V0, pendant que le signal Cb prend la valeur 1, comme le montre le signal Cc de la figure 2. Il en résulte que, en dehors d'un fonctionnement normal, la porte ET, en laissant. passer le signal Cb, ouvre la barrière Ei (et les n-1 autres barrières) et ferme l'interrupteur N, ce qui vide les circuits d'intégration intermédiaires tels que Di.

Pendant une seconde partie des durées de 1 microseconde du signal Ca, déterminée par les impulsions du signal Cd de la figure 2, les charges contenues dans le circuit d'intégration intermédiaire Di, si elles n'ont pas été vidées à travers l'interrupteur N, sont transférées dans le circuit d'intégration principal Ji par le circuit de transfert Gi. Les charges contenues dans le circuit d'intégration principal Ji sont alors transférées par le multiplexeur K, sur une ligne de sortie S ; le transfert est commandé par le signal Ce dont la fréquence est égale à (64x10⁻⁶)⁻¹xn.

L'invention n'est pas limitée à l'exemple qui vient d'être décrit, c'est ainsi, en particulier, que chacune des n chaînes qui vont d'un détecteur à une entrée du multiplexeur peut avoir ses propres moyens pour vider le contenu de son circuit d'intégration intermédiaire lors d'un éblouissement de son détecteur ; une telle solution est évidemment plus onéreuse mais elle permet de ne vider que ceux des circuits d'intégration intermédiaires qui appartiennent à une chaîne dont le capteur a été ébloui.

Il est également possible, dans chaque chaîne, en fonctionnement normal, de garder en mémoire, au moment de son transfert, la dernière valeur de la charge contenue dans le circuit d'intégration intermédiaire ; ceci a pour, non pas d'empêcher, en fonctionnement anormal, tout transfert dans le circuit d'intégration principal mais de permettre de transférer la dernière valeur en mémoire relative à la chaîne considérée, par exemple en ne vidant pour cela le circuit d'intégration intermédiaire que jusqu'à la valeur contenue en mémoire.

D'une façon générale l'invention est applicable à toute caméra à balayage optomécanique, que son détecteur soit un détecteur thermique ou qu'il travaille dans le domaine du visible ou de l'ultra-violet ainsi qu'à toute caméra sans balayage optomécanique, utilisant un détecteur fait d'une mosaïque bidimensionnelle de capteurs travaillant dans l'infra-rouge, le visible ou l'ultra-violet.

## Revendications

1. Caméra munie d'une protection électronique contre les contre-mesures, comportant en série un détecteur ayant n capteurs (A1-An), où n est un nombre entier positif, n éléments de couplage (B1-Bn, D1-Dn, G1-Gn) reliés respectivement aux n capteurs et n circuits d'intégration principaux (J1-Jn) reliés respectivement aux n éléments de couplage pour en recevoir des charges produites par les n capteurs et les transmettre à une fréquence donnée, caractérisée en ce que tout élément de couplage donné parmi les n éléments de couplage comprend un circuit d'intégration intermédiaire (D1-Dn) pour accumuler des charges produites par le capteur auquel est relié l'élément de couplage donné et les transmettre à une fréquence supérieure à ladite fréquence donnée et en ce que la caméra comporte des moyens de mesure (M) pour mesurer la charge des n circuits d'intégration intermédiaires et des moyens de commande (E1-En, N, P, Q) pour modifier les contenus des circuits d'intégration intermédiaires lorsque l'une au moins des charges mesurées par les moyens de mesure dépasse une valeur donnée.

2. Caméra selon la revendication 1, caractérisée en ce que à chaque circuit d'intégration intermédiaire (D1-Dn) est relié un commutateur (E1-En) qui lui est propre, qui fait partie des moyens de commande et qui vide, au moins partiellement, de ses charges le circuit d'intégration intermédiaire quand le circuit de mesure (M) mesure une valeur supérieure à une valeur donnée (V1).

3. Caméra selon la revendication 2, caractérisée en ce que en dehors du commutateur (E1-En) propre à chaque circuit d'intégration intermédiaire (D1-Dn), les moyens de commande (E1-En, N, P, Q) sont communs aux circuits d'intégration intermédiaires des n éléments de couplage en ce sens qu'ils fournissent un seul et même signal (Cc) pour commander les commutateurs (E1-En) de tous les circuits d'intégration intermédiaires (D1-Dn) des n éléments de couplage (B1-Bn, D1-Dn, G1-Gn).

## Patentansprüche

1. Kamera, versehen mit elektronischem Schutz gegen die Gegenmaßnahmen, die in einer Serienanordnung einen Detektor mit n Aufnehmern (A1-An), wobei n eine positive ganze Zahl ist, n Kopplungselemente (B1-Bn, D1-Dn, G1-Gn), die mit jeweils einem der n Aufnehmer verbunden sind, und n Hauptintegrationsschaltungen (J1-Jn) enthält, die jeweils mit einem der n Kopplungselemente verbunden sind, um Ladungen zu empfangen, die von den n Aufnehmern erzeugt werden, und sie mit einer gegebenen Frequenz zu übertragen, dadurch gekennzeichnet, daß jedes gegebene Kopplungselement der n Kopplungselemente eine Zwischenintegrationsschaltung (D1-Dn) enthält, um die Ladungen zu akkumulieren, die von dem Aufnehmer erzeugt werden, mit dem das gegebene Kopplungselement verbunden ist, und sie mit einer Frequenz zu übertragen, die größer als die gegebene Frequenz ist, und daß die Kamera Meßmittel (M) zum Messen der Ladung der n Zwischenintegrationsschaltungen und Steuermittel (E1-En, N, P, Q) zum Modifizieren der Inhalte der Zwischenintegrationsschaltungen, wenn wenigstens eine der von den Meßmitteln gemessenen Ladungen einen gegebenen Wert übersteigt, enthält.

2. Kamera nach Anspruch 1, dadurch gekennzeichnet, daß jede Zwischenintegrationsschaltung (D1-Dn) mit einem zu ihr gehörenden Umschalter (E1-En) verbunden ist, der einen Teil der Steuermittel bildet und der wenigstens teilweise die Ladungen der Zwischenintegrationsschaltung abführt, wenn die Meßschaltung (M) einen Wert mißt, der größer als ein gegebener Wert (V1) ist.

3. Kamera nach Anspruch 2, dadurch gekennzeichnet, daß die Steuermittel (E1-En, N, P, Q) mit Ausnahme des zu jeder Zwischenintegrationsschaltung (D1-Dn) gehörenden Umschalters (E1-En) den Zwischenintegrationsschaltungen der n Kopplungselemente in dem Sinn gemeinsam sind, daß sie ein und dasselbe Signal (Cc) liefern, um die Umschalter (E1-En) sämtlicher Zwischenintegrationsschaltungen (D1-Dn) der n Kopplungselemente (B1-Bn, D1-Dn, G1-Gn) zu steuern.

## Claims

1. Camera equipped with electronic protection against counter measures, including, in series, a detector having n sensors (A1-An), where n is a positive integer, n coupling elements (B1-Bn, D1-Dn, G1-Gn) linked respectively to the n sensors, and n main integration circuits (J1-Jn) linked respectively to the n coupling elements in order to receive therefrom charges produced by the n sensors and transmit them at a given frequency, characterized in that every given coupling element among the n coupling elements comprises an intermediate integration circuit (D1-Dn) for accumulating charges produced by the sensor to which the given coupling element is linked and for transmitting them at a frequency greater than the said given frequency, and in that the camera includes measurement means (M) for measuring the charge of the n intermediate integration circuits, and control means (E1-En, N, P, Q) for altering the contents of the intermediate integration circuits when at least one of the charges measured by the measurement means exceeds a given value.

2. Camera according to Claim 1, characterized in that each intermediate integration circuit (D1-Dn) has a change-over switch (E1-En) linked with it, which is specific to it, which forms part of the control means and which, at least partially, empties the intermediate integration circuit of its charges when the measurement circuit (M) measures a value greater than a given value (V1).

3. Camera according to Claim 2, characterized in that, apart from the change-over switch (E1-En) specific to each intermediate integration circuit (D1-Dn), the control means (E1-En, N, P, Q) are common to the intermediate integration circuits of the n coupling elements in the sense that they supply one and only one signal (Cc) to control the change-over switches (E1-En) of all the intermediate integration circuits (D1-Dn) of the n coupling elements (B1-Bn, D1-Dn, G1-Gn).
